# EUROPÄISCHE PATENTSCHRIFT

(11) **EP 3 017 686 B1**
(45) Veröffentlichungstag und Bekanntmachung des Hinweises auf die Patenterteilung: **15.01.2020**
(21) Anmeldenummer: 15002765.4
(22) Anmeldetag: 24.09.2015
(51) Int. Cl.: A01G 3/025

(54) **SCHNEIDKOPF, INSBESONDERE FÜR EINE BAUMSCHERE**
CUTTING HEAD, IN PARTICULAR FOR A PAIR OF PRUNING SHEARS
TÊTE DE COUPE, EN PARTICULIER POUR UN SÉCATEUR

(30) Priorität: 04.11.2014 DE 102014016272
(43) Veröffentlichungstag der Anmeldung: 11.05.2016
(73) Patentinhaber: MTD PRODUCTS INC., Valley City, Ohio 44280 (US)
(72) Erfinder: Held, Peter, 57584 Scheuerfeld (DE)
(74) Vertreter: Meissner Bolte Partnerschaft mbB

(56) Entgegenhaltungen:
- EP-A1- 0 895 712
- EP-A2- 1 389 417
- DE-A1-102005 039 084
- DE-C- 615 201

## Beschreibung

Die Erfindung bezieht sich auf einen Schneidkopf, insbesondere für eine Baumschere, der im Oberbegriff des Anspruchs 1 genannten Art.

Derartige Schneidköpfe sind in vielfältigen Formen bekannt und zumeist am Ende eines Handhabungs-Stiels erheblicher Länge befestigt, der gegebenenfalls teleskopartig ausgebildet sein kann.

Aus der EP 0895712 A1 ist ein Schneidkopf einer Astschere bekannt, bei dem der Schneidkopf um eine zu dem Handhabungs-Stiel unter einem rechten Winkel angeordnete Achse verschwenkbar ist, um die herum auch eine aus ersten und zweiten Teilen mit unterschiedlichen Durchmessers bestehende Seil- und/oder Kettenscheibe drehbar befestigt ist. Der den kleineren Durchmesser aufweisende Teil ist über eine Kette mit dem beweglichen Messer zu dessen Betätigung verbunden, während der einen größeren Durchmesser aufweisende Teil über ein Seil oder Band mit einer an dem Stiel angeordneten Betätigungseinrichtung verbunden ist. Hierbei sind die Messer jedoch an einer Verlängerung das die Seilund/oder Kettenscheibe tragenden Gehäuses befestigt, sodass sich insgesamt eine relativ lange Bauform des Schneidkopfes ergibt.

Aus der DE 615 201 ist ein Schneidkopf der im Oberbegriff des Anspruchs 1 genannten Art bekannt, der ein hohles flaches Gehäuse aufweist, das durch zwei Gehäusehälften gebildet ist. Eine Gehäusehälfte bildet gleichzeitig eine Gegenschneide, und ein bewegliches Messer ist um eine Schwenkwelle in den beiden Gehäusehälften schwenkbar gelagert. Das bewegliche Messer weist einen Hebelarm auf, dessen freies Ende mit Antriebseinrichtungen, beispielsweise einem Seilzug, verbunden ist, der sich durch einen Stiel-Anschluss und den Stiel zum unteren Ende des Stiels erstreckt und aus diesen über einen Schlitz herausgeführt ist. Dieser Schneidkopf weist ein erhebliches Gewicht auf, da aufgrund der Ausgestaltung der einen Gehäusehälfte als Gegenschneide diese Gehäusehälfte aus Metall hergestellt sein muss, und es sind erhebliche Betätigungskräfte an den Antriebseinrichtungen erforderlich, wenn beispielsweise Äste mit einem größeren Durchmesser geschnitten werden sollen.

Um diese hohen Betätigungskräfte, insbesondere gegen Ende des Schnittes, zu verringern, ist es beispielsweise aus der DE 816 616 bekannt, den Seilzug an dem Hebelarm des beweglichen Messers so anzuordnen, das der Seilzug im Wesentlichen senkrecht zur Achse des Hebelarms angreift und sich einem rechten Winkel immer mehr nähert, je mehr die Schere in ihre Schließstellung gelangt.

Weiterhin ist es beispielsweise aus der US 1507225 bekannt, Übersetzungsgetriebe für die Betätigung des beweglichen Messers in dem Schneidkopf anzuordnen. Zu diesem Zweck ist auf einer die Verlängerung des Stiels bildenden Grundplatte, die gleichzeitig die Gegenschneide bildet und das bewegliche Messer schwenkbar lagert, ein Getrieberad in Form einer zweiteiligen Kettenscheibe befestigt, die einen ersten Teil mit kleinerem Durchmesser aufweist, der zumindest teilweise von einer Kette umschlungen ist, die an ihrem einen Ende an diesem kleineren Teil der Doppelkettenscheibe befestigt ist, während ihr anderes Ende an dem beweglichen Messer befestigt ist, um bei einer Drehung der Kettenscheibe das Messer in Richtung auf die Gegenschneide anzutreiben. Der größere Teil der Doppelkettenscheibe ist von einer zweiten Kette umschlungen, die an dem größeren Teil der Doppelkettenscheibe befestigt ist und deren anderes Ende über eine Seilrolle und einen Flaschenzug mit einem Betätigungsseil verbunden ist. Da der zweite Teil der Doppelkettenscheibe einen erheblichen Abstand von der Grundplatte aufweist, muss die Grundplatte relativ massiv ausgebildet sein, um eine Verformung bei einer Betätigung des Seilzuges zu verhindern. Weiterhin weist dieser Schneidkopf eine erhebliche Dicke quer zur Ebene des Messers beziehungsweise der Gegenschneide auf, was insbesondere bei sehr dicht bewachsenen Bäumen oder Büschen unerwünscht ist. Außerdem ergibt sich ein relativ hohes Gewicht des Schneidkopfes, was störend ist, wenn dieser Schneidkopf am Ende eines relativ langen Stiels angeordnet ist.

Wie dies in der DE 3330093 gezeigt ist, kann die Betätigung eines Seilzuges zum Bewegen des beweglichen Messers in Richtung auf die Gegenschneide durch eine an dem Stiel verschiebbar befestigte Schiebehülse gebildet werden, die sich durch Schlitze in das Innere des hohlen Stiels erstreckende Ansätze aufweist, die mit einem Verbindungsstück verbunden sind, an dem das freie Ende eines Bestätigungsseils befestigt ist.

Um einen Zugang auch an schwieriger zu erreichende Stellen in den Ästen eines Baumes zu erreichen, ist es weiterhin aus der EP 0485518 B1 bekannt, den Schneidkopf an dem oberen Ende des Stiels nicht starr sondern verschwenkbar zu befestigten, wodurch die Probleme eines hohen Gewichtes und der Betätigungskräfte weiter vergrößert werden.

Der Erfindung liegt die Aufgabe zugrunde, einen Schneidkopf der eingangs genannten Art zu schaffen, der bei einer leichten Bauweise und kostengünstigen Konstruktion einen hohen Wirkungsgrad bei der Betätigung aufweist und dennoch eine geschlossene Bauweise aufweist, um ein Verfangen des Schneidkopfes in dem Astwerk und eine Verschmutzung des Mechanismus des Schneidkopfes zu vermeiden.

Diese Aufgabe wird durch die im Patentanspruch 1 angegebenen Merkmale gelöst.

Vorteilhafter Ausgestaltungen und Weiterbildungen der Erfindung ergeben sich aus den Unteransprüchen.

Bei dem erfindungsgemäßen Schneidkopf sind sämtliche Teile des Mechanismus einschließlich des Antriebsmechanismus für das bewegliche Messer in einem geschlossenen Gehäuse angeordnet, aus dem lediglich die Gegenschneide der Schneidbereich des beweglichen Messers vorspringen.

Die Antriebseinrichtungen schließen ein Getrieberad ein, das aus zwei koaxial miteinander verbundenen Teilrädern unterschiedlichen Durchmessers gebildet ist, wobei der einen kleineren Durchmesser als der zweite Teil aufweisende erste Teil vorzugweise in der Ebene des Messers angeordnet ist und zumindest teilweise von einem ersten Verbindungselement umschlungen ist, über das dieser erste Teil mit einem Hebelarm des Messers verbunden ist. Der zweite einen größeren Durchmesser aufweisende Teil des Getrieberades ist zumindest teilweise von einem zweiten Verbindungselement umschlungen, das sich zum Stiel hin und durch diesen hindurch zu einem Betätigungselement erstreckt. Dieser einen größeren Durchmesser aufweisende Teil des Getrieberades ist im Wesentlichen in der Ebene der Gegenschneide angeordnet, die auf der Innenseite des Gehäuses befestigt ist. Auf diese Weise ist die Dicke des Schneidkopfes auf einen Wert verringert, der im Wesentlichen der Stärke des Messers und der Gegenschneide entspricht. Die Gehäusehälften können aus einem eine relativ geringe Stärke und entsprechend ein geringes Gewicht aufweisendem Kunststoffmaterial hergestellt sein und nur unwesentlich zur Breite des Schneidkopfes beitragen.

Dieser Schneidkopf kann gemäß einer bevorzugten Ausführungsform um eine Schwenkwelle mit einem mit dem Stiel verbundenen Stiel-Anschluss schwenkbar verbunden sein, wobei sich die Schwenkwelle im Wesentlichen unter einem rechten Winkel zur Längsachse des Stiels erstreckt. Das von dem einen größeren Durchmesser aufweisenden Teil des Getrieberades abgehende Verbindungselement wird hierbei über eine Umlenkrolle geführt, die derart angeordnet ist, dass die Längsachse des sich von dem zweiten Teil des Getrieberades zur Umlenkrolle erstreckende Längenbereich des zweiten Verbindungselementes im Wesentlichen gleichachsig zu der Mittelachse der Schwenkwelle angeordnet ist. Auf diese Weise wird eine Änderung des Öffnungswinkels des beweglichen Messers bei einem Verschwenken des Schneidkopfes gegenüber dem Stiel verhindert.

Das erste Verbindungselement kann sich ausgehend von dem Getrieberad in Richtung auf den Hebelarm des Messers derart erstrecken, dass sich der Winkel zwischen der Längsachse dieses zweiten Verbindungselementes und einer die Schwenkachse des Messers mit dem Anlenkpunkt des zweiten Verbindungselementes erstreckenden Linie beim Schließen des Messers zunehmend einem rechten Winkel nähert, so dass die auf dem Hebelarm ausgeübte Kraft beim Schließen zunehmend vergrößert wird.

Die ersten und zweiten Verbindungselemente können eine Kette, ein Seil, ein Band oder dergleichen gebildet sein, wobei gemäß einer bevorzugten Ausführungsform vorgesehen ist, dass das erste Verbindungselement durch eine Kette und das zweite Verbindungselement durch ein Seil gebildet ist, um das Gewicht des Schneidkopfes soweit wie möglich zu verringern.

Die Erfindung wird nachfolgend anhand eines in der Zeichnung dargestellten Ausführungsbeispiels näher erläutert, das einen mit dem Stiel schwenkbar verbundenen Schneidkopf zeigt, obwohl die Grundgedanken des Schneidkopfes auch bei einem starr mit dem Stiel verbundenen Schneidkopf verwirklicht sein können.

In der Zeichnung zeigen:
Figur 1 eine perspektivische Gesamtansicht des Schneidkopfes;
Figur 2 eine perspektivische Gesamtansicht des Schneidkopfes bei abgenommener rechter Gehäusehälfte und abgenommenen Handrad;
Figur 3 eine der Figur 2 entsprechende Ansicht des Schneidkopfes bei gegenüber dem Stiel verschwenkter Position;
Figur 4 eine Ansicht des Schneidkopfes von oben;
Figur 5 eine Ansicht des Schneidkopfes von oben in maximal ausgeschwenkter Position;
Figur 6 eine schematische Teilansicht der beiden Gehäusehälften;
Figur 7 eine Längsschnittansicht des Schneidkopfes in der Kettenebene sowie eine Querschnittsansicht bei Betrachtung in Richtung der Pfeile A-A;
Figur 8 eine Längsschnittansicht des Schneidkopfes in der Seilebene sowie eine Querschnittsansicht in Richtung der Pfeile B-B;
Figur 9 eine perspektivische Darstellung der beiden Gehäusehälften und des Handrades;
Figur 10 eine perspektivische Ansicht, teilweise im Schnitt durch den Schneidkopf zur Erläuterung der Messer-Lagerung;
Figur 11 eine Explosionsdarstellung der Ausführungsform des Schneidkopfes, die die einzelnen Teile getrennt zeigt;
Figur 12 eine Ansicht des vormontierten Stiel-Anschlusses von oben;
Figur 13 eine Ansicht des vormontierten Stiel-Anschlusses von unten;
Figur 14 eine Ansicht des linken Teils des Stiel-Anschlusses mit den darin montierten Teilen.

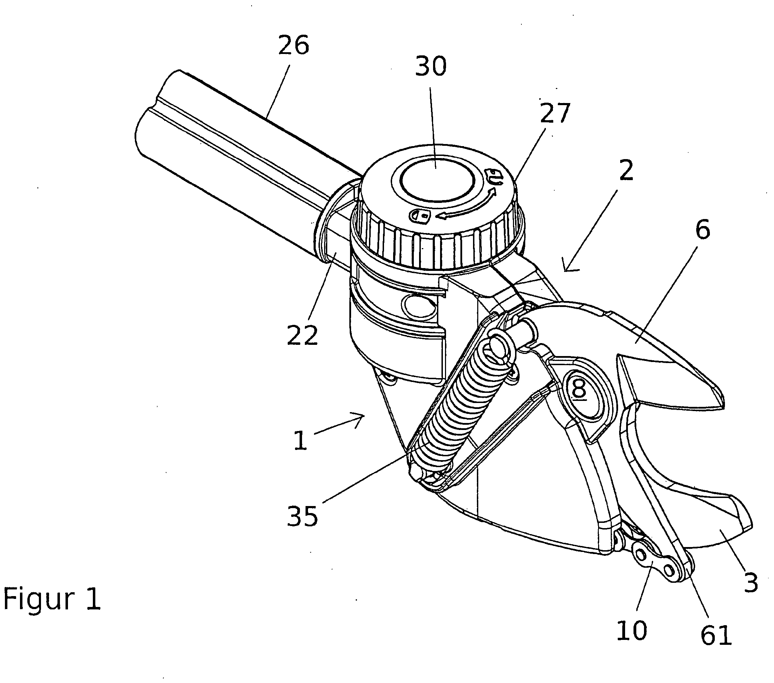

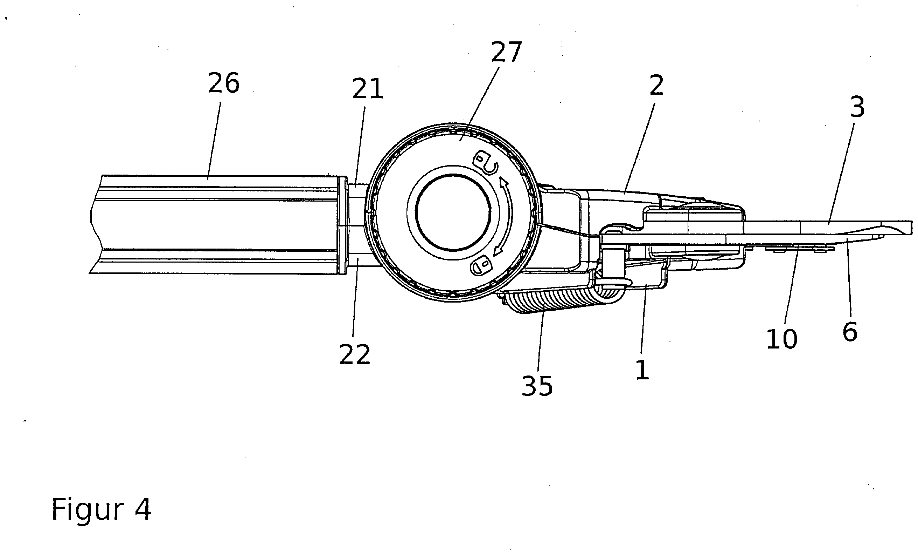

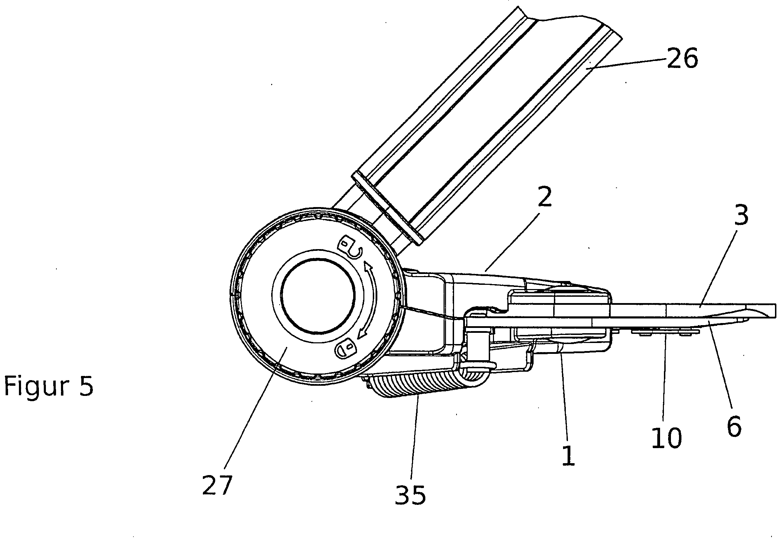

In Figur 1 ist eine perspektivische Gesamtansicht des Schneidkopfes gezeigt, der ein aus zwei Gehäusehälften 1, 2 bestehendes Gehäuse aufweist, in dem eine Gegenschneide 3 und ein Messer 6 angeordnet sind, das um eine Schwenkachse 8 verschwenkbar ist. Der gesamte Schwenkkopf ist über einen Stiel-Anschluss 21, 22 mit einem Stiel 26 schwenkbar verbunden, um eine Verschwenkung des Schneidkopfes gegenüber dem Stiel in der insbesondere aus den Figuren 4 und 5 erkennbaren Weise zu ermöglichen. Das Verschwenken des Schneidkopfes kann nach dem Lösen eines Handrades 27 gegenüber dem Stiel 26 verschwenkt werden oder auf eine mit dem Stiel ausgerichtete Stellung ausgerichtet werden.

Das Messer 6 wird durch eine Rückholfeder 35 in eine Ruhestellung vorgespannt und wird über eine Kette 10 und einen Hebelarm 61 über einen noch zu erläuternden Antriebsmechanismus in die Schließstellung überführt.

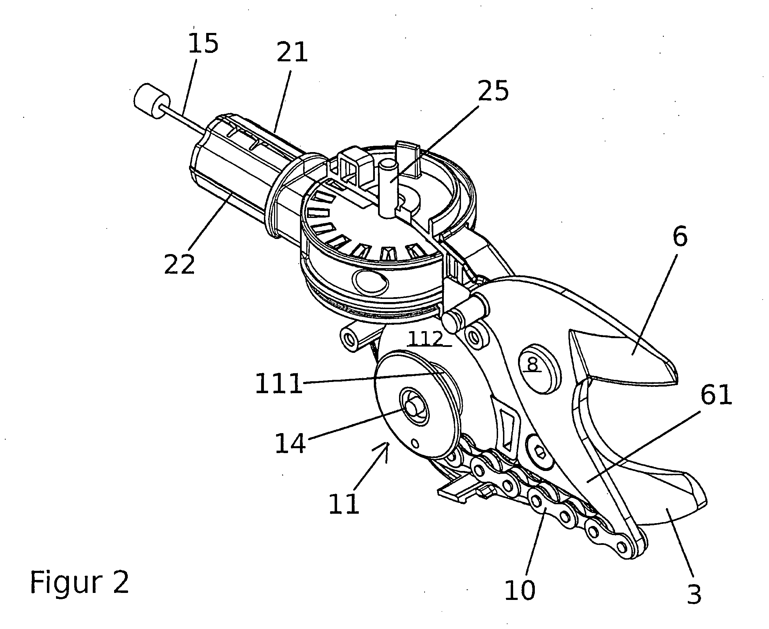

Die Schwenkachse 25 erstreckt sich unter einer Abdeckkappe 30 durch den Stiel-Anschluss und das Gehäuse hindurch, wie dies insbesondere aus Figur 2 zu erkennen ist, In Figur 2 ist die rechte Hälfte 1 des Gehäuses und das Handrad abgenommen darstellt, um weitere Einzelheiten des Schneidkopfes erkennen zu lassen.

Wie dies weiterhin aus Figur 2 zu erkennen ist, besteht auch der Stiel-Anschluss aus zwei Hälften 21, 22 die miteinander verbunden und über die Schwenkwelle 25 mit dem Gehäuse des Schneidkopfes verbunden sind.

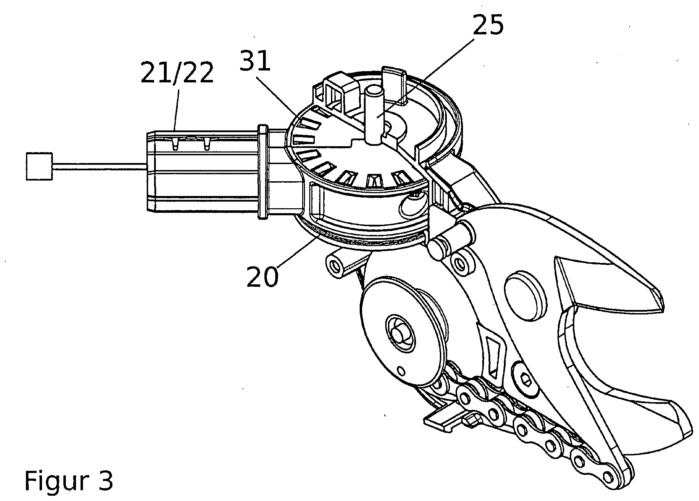

Figur 3 entspricht im Wesentlichen der Figur 2, wobei jedoch die Verschwenkung des Schneidkopfes gegenüber dem Stiel-Anschluss und damit dem Stiel gezeigt ist.

Die Figuren 4 und 5 zeigen die Stellung des Schneidkopfes in einer mit dem Stiel 26 ausgerichteten Stellung beziehungsweise in einer maximal ausgeschwenkten Position, in der sich der Schneidkopf von oben in dem zu schneidenden Ast einhängen lässt, um das Schneiden zu erleichtern.

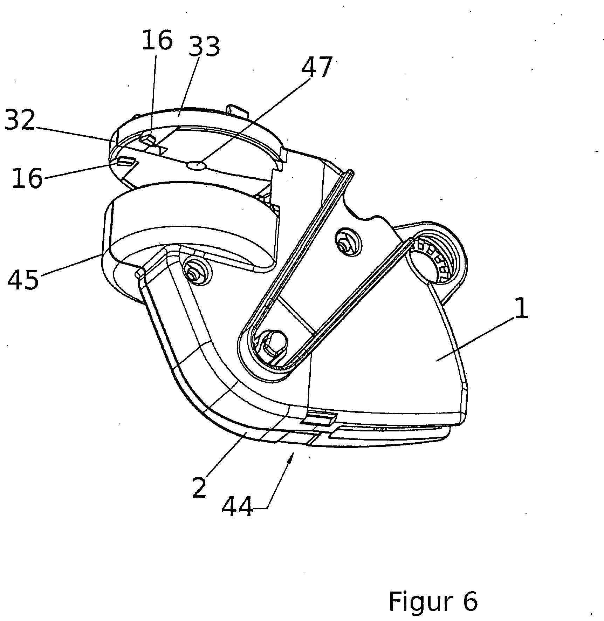

In Figur 6 ist eine Ansicht des Gehäuses des Schneidkopfes mit den rechten und linken Hälften 1, 2 gezeigt, wobei zu erkennen ist, dass diese beiden Hälften an ihrem unteren Ende über eine Rastverbindung 44 miteinander verbunden sind und im Übrigen durch Schrauben miteinander verbunden sind. Weiterhin weist das Gehäuse an seinem in Figur 6 oberen Ende ringförmige Lagerelemente 33, 45 auf, die Bohrungen 47 zur Aufnahme einer Schraube 25 aufweisen, die die Schwenkachse für die Verschwenkung des Schneidkopfes gegenüber dem Stiel-Anschluss bildet. Die Unterseite des oberen Ringteils 33 ist mit Rastvorsprüngen 47 versehen die mit Rastvertiefungen in dem noch näher zu beschreibenden Stiel-Anschluss 21, 22 zusammenwirken, um beim Festziehen des Handrades 27 eine sichere Arretierung des Schneidkopfes gegenüber dem Stiel in einer vorgegebenen Schneidstellung sicherzustellen.

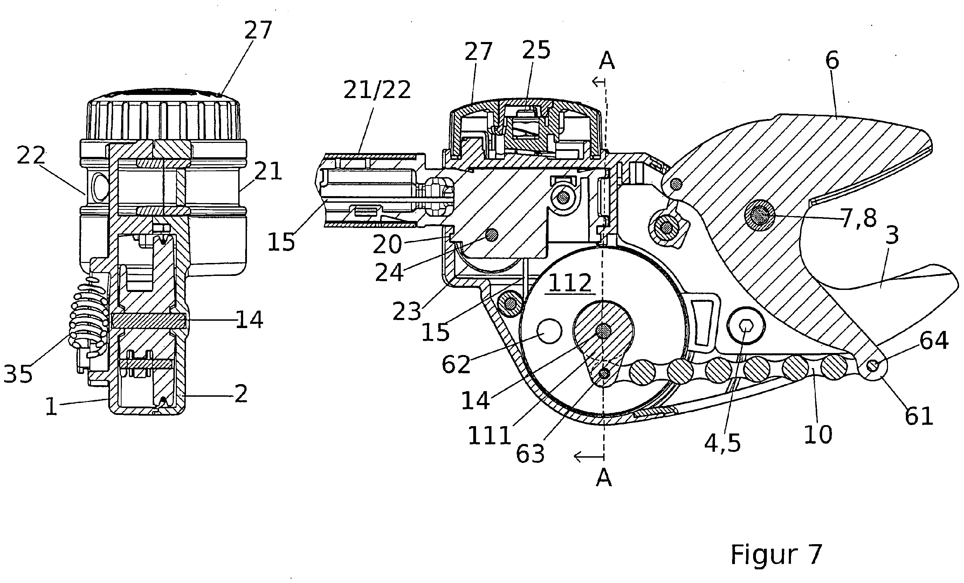

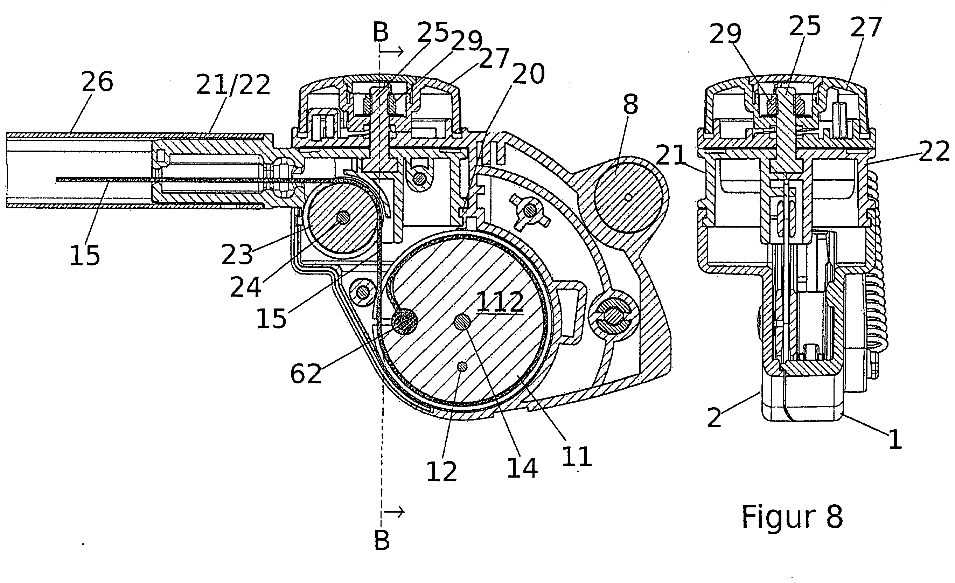

Die Figuren 7 und 8 zeigen Längs- und Querschnittsansichten durch den Schneidkopf in der Kettenebene beziehungsweise in der Seilebene.

Wie dies insbesondere aus den Figuren 2, 7 und 8 zu erkennen ist, ist zwischen den Gehäusehälften 1 und 2 ein Getrieberad 11 um eine Drehachse 14 drehbar gelagert. Das Getrieberad weist einen ersten Teil 111 und einen zweiten Teil 112 auf, der vorzugsweise koaxial zu dem ersten Teil 111 angeordnet ist und einen größeren Durchmesser als der erste Teil 111 aufweist.

Der erste Teil 111 ist zumindest teilweise von einem ersten Verbindungselement in Form einer Kette 10 umschlungen und bei 63 an dem ersten Teil 111 befestigt. Die Kette 10 erstreckt sich von dem Getrieberad 11 zu dem freien Ende eines Hebelarms 61 des Messers 6, das um eine Welle 7, 8 verschwenkbar ist.

Ein ein zweites Verbindungselement bildendes Seil 15 ist mit einem eine Befestigungsstelle bildenden üblichen Nippel 62 in einer Aussparung am Umfang des zweiten Teils 112 des Getrieberades 11 festgelegt und erstreckt sich um den zweiten Teil 112 herum zu einer Umlenkrolle 23, die im Inneren des Stiel-Anschlusses 21, 22 über eine Welle 24 gelagert ist, wie dies insbesondere aus Figur 8 zu erkennen ist. Von der Umlenkrolle 23 und durch das Innere des Stiel-Anschlusses 21, 22 beziehungsweise des Stiels 26 erstreckt sich das Seil 15 zu nicht gezeigten Betätigungseinrichtungen für das Messer 6.

Figur 7 zeigt weiterhin, dass das hintere Ende der Gegenschneide 3 einen der Form und Größe des zweiten Teils 112 des Getrieberades 11 angepassten Umriss aufweist, so dass dieser zweite Teil 112 zumindest weitgehend in der Ebene der Gegenschneide 3 angeordnet werden kann, während der erste Teil 111 des Getrieberades 11 in der Ebene des beweglichen Messers 6 liegt. Bei Verwendung einer entsprechende schmalen Kette oder eines Seils für das ertse Verbindungselement kann auch der zweite Teil 112 des Getrieberades vollständig in der Ebene der Gegenschneide 3 liegen.

Auf diese Weise wird auch bei einer gegenüber dem Stiel 26 verschwenkbaren Ausführungsform eine kurze Baulänge und eine optimale Krafteinleitung der von dem Seil 15 ausgeübten Zugkraft zwischen Messer und Gegenschneide erreicht.

In Figur 8 ist weiterhin die Schwenkwelle 25 zu erkennen, die den Stiel-Anschluss 21, 22 mit dem Gehäuse 1, 2 des Schneidkopfes verbindet. Die Schwenkwelle ist in Form einer Schraube 25 ausgebildet, auf die eine in dem Handrad befestigte Mutter 29 aufgeschraubt ist, die das Festlegen des Schneidkopfes gegenüber dem Stiel 26 in einer vorgegebenen Winkelstellung ermöglicht.

Wie Figur 8 weiterhin zeigt, ist die Längsachse dieser Schwenkwelle bzw. Verbindungsschraube 25 mit der Längsachse des sich zwischen dem Teil 112 des Getrieberades 11 und der Umlenkrolle 23 erstreckenden Längenabschnittes des Seils 15 ausgerichtet, so dass ein Verschwenken des Schneidkopfes gegenüber dem Stiel 26 nicht zu einer Änderung der Schließstellung des Messers führt. Zusätzlich zu der Schwenkwelle 25 kann die Drehführung des Stiel-Anschlusses 21, 22 an dem Gehäuse des Schneidkopfes über eine ringförmige Nut- und Federverbindung 20 erfolgen.

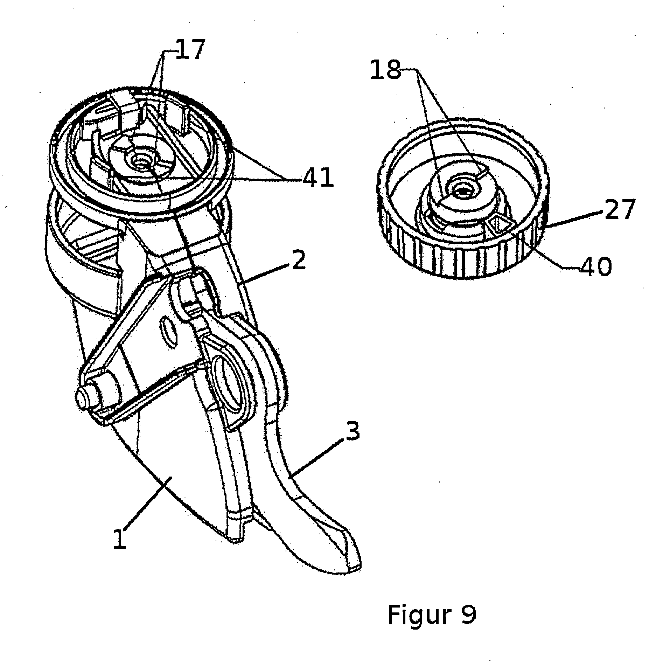

In Figur 9 sind die beiden Gehäusehälften 1 und 2 mit der Gegenschneide 3 und dem Handrad 27 getrennt dargestellt, wobei zu erkennen ist, dass das Handrad 27 um die in Figur 8 gezeigte Schwenkwelle 25 drehbar gelagert ist, wobei die in den Figuren 7 und 8 gezeigte Mutter 29 die axiale Begrenzung für das Handrad bildet. Das Handrad ist mit zwei Spiralflächen 18 versehen, die auf entsprechenden Spiralflächen 17 der Gehäusehälften 1 und 2 gleiten.

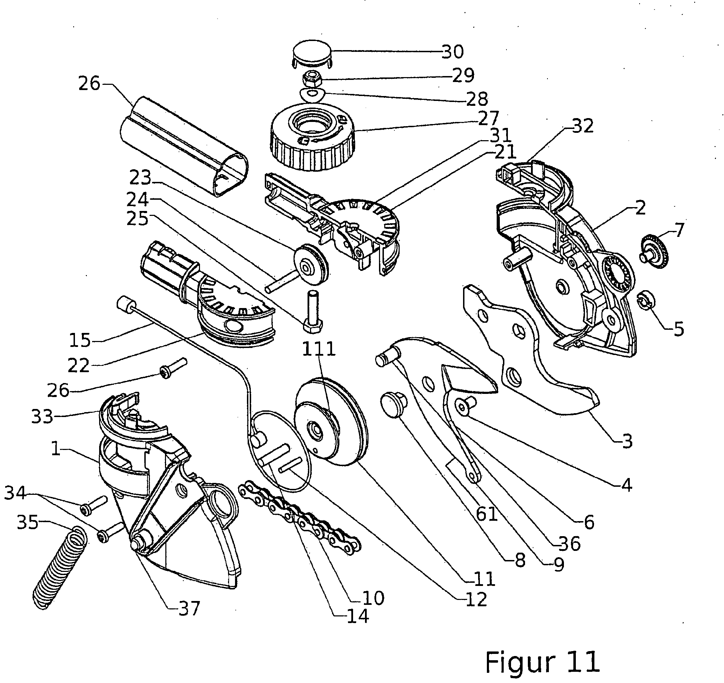

Durch Festdrehen des Handrades wird der Stiel-Anschluss 21, 22 mit der Rastplatte 32, 33 verspannt. Wird das Handrad gelöst, so können die Rastnasen 16 über die Rastvertiefungen 31 (siehe Figur 11) hinweggleiten. Die ebenfalls in Figur 11 gezeigte Wellscheibe 28 gewährleistet, dass auch bei gelöstem Handrad eine gewisse axiale Vorspannung zwischen der Rastscheibe 32/33 und dem Stiel-Anschluss 21, 22 verbleibt, so dass die vorgegebenen Rastpositionen von dem Bediener wahrgenommen werden können.

Die Drehbewegung des Handrades 27 wird durch einen Nocken 40 und die Anschläge 41 gemäß Figur 9 begrenzt.

Zum Lösen und Anziehen des Handrades 27 genügt damit etwa eine halbe Umdrehung des Handrades.

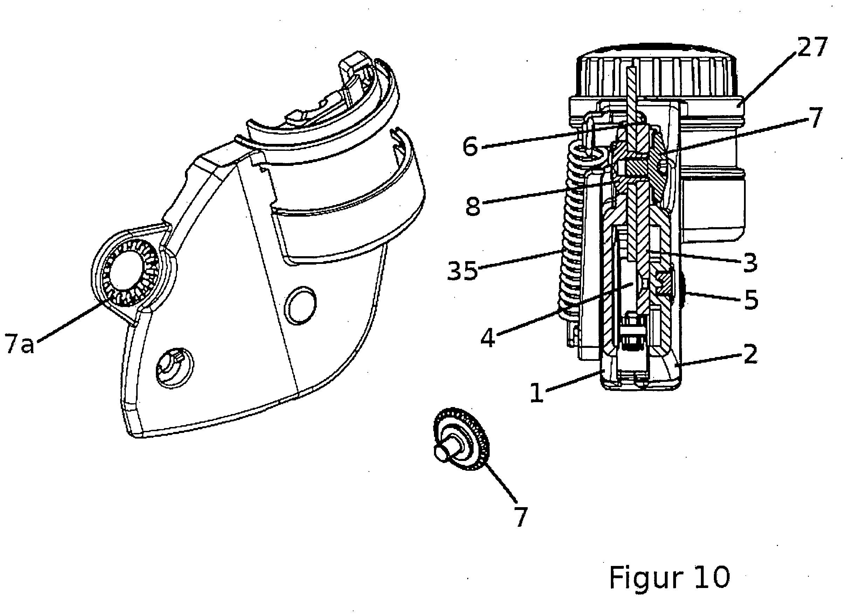

Figur 10 lässt in Verbindung mit Figur 11 die Befestigung der Gegenschneide 3 mit Hilfe einer Schraube 4 und einer Schlitzmutter 5 an der linken Gehäusehälfte 2 erkennen. Die Mutter 8 und die Rastschraube 7 bilden das Drehgelenk für das an der Gegenschneide drehbar befestigte Messer 6. Die aus Figur 11 erkennbare flache Verzahnung an der Rastschraube 7 greift in entsprechende Ausnehmungen 7a an Außenseite der linken Gehäusehälfte 2 ein.

Die Mutter 8 weist vorzugsweise einen Schaft mit einem sich durch das Messer 6 erstreckenden ersten Abschnitt und einem von einer runden Form abweichenden zweiten Abschnitt auf, der sich durch eine entsprechende unrunde Bohrung in der Gegenschneide erstreckt und in dieser drehfest festgelegt ist.

Damit ist eine feinstufige Einstellung der Anpresskraft zwischen Messer 6 und Gegenschneide 3 möglich. Der Formschluss zwischen der Rastschraube 7 und der Gehäusehälfte 2 verhindert darüber hinaus, dass sich die Schraube beim Betrieb der Schere lösen kann.

Gleichzeitig ergeben die Mutter 8 und die Rastschraube 7 eine weitere Festlegung der Gegenschneide 3 an der linken Gehäusehälfte 2.

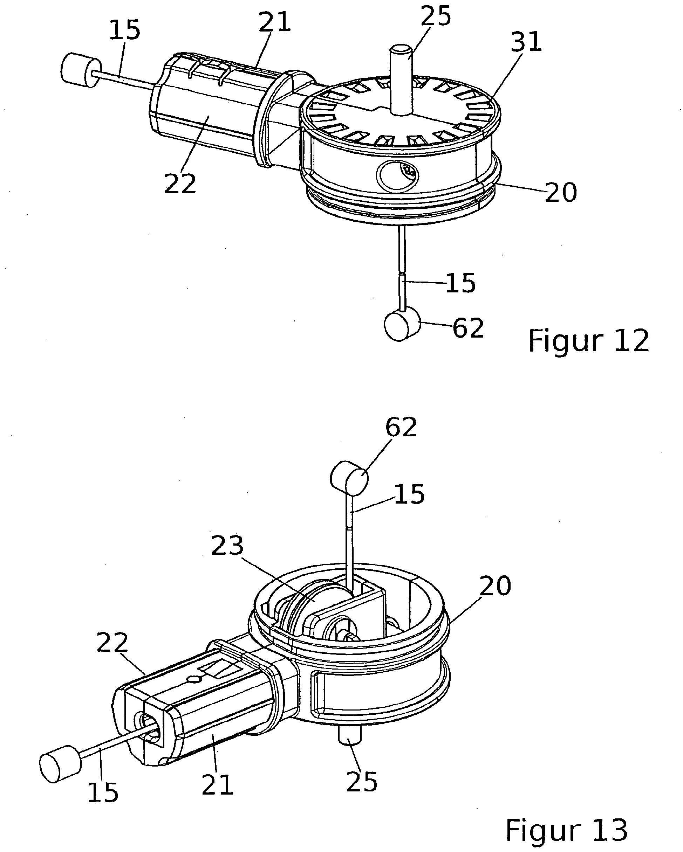

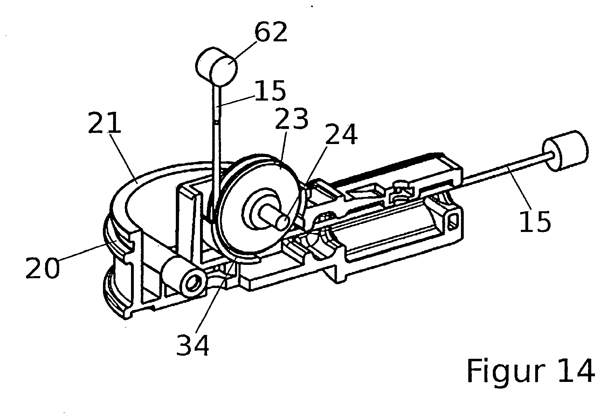

Die beschriebene Ausführungsform des Schneidkopfes ermöglicht selbst bei einer schwenkbaren Befestigung des Schneidkopfes an dem Stiel eine sehr einfache Montage, da die beiden Hälften 21, 22 des Stiel-Anschlusses mit der Schwenkwelle 25, der Umlenkrolle 23 und und dem zugehörigen Verbindungselement 15 gemäß den Figuren 12 und 13 vormontiert werden können, wobei durch eine teilkreisförmige Rippe 34 gemäß Figur 14 das Herausspringen des Verbindungselementes 15 aus der Führungsnut der Umlenkrolle 23 verhindert wird. Diese erste Baugruppe kann dann ebenso wie die restlichen wesentlichen Funktionselemente, wie insbesondere Gegenschneide 3, Messer 6, Getrieberad 11 und Verbindungselement 10 in der einen, bei der beschriebenen Ausführungsform linken, Gehäusehälfte 2 montiert und festgelegt werden, wobei das in dieser Gehäusehälfte liegende Ende des Verbindungselementes 15 mit dem bei Seilzügen üblichen Befestigungs-Nippel 62 um des Getrieberad 11 herum gelegt und der Nippel in die entsprechende Aussparung am Umfang des den größeren Durchmesser aufweisenden Teils 112 des Getrieberades 11 eingelegt wird.

Nach dem Aufsetzen rechten Gehäusehälfte 1 kann dann zum Abschluss das Handrad 27 auf der Schwenkwelle 25 befestigt werden.

In Figur 11 sind die einzelnen vorstehend beschriebenen Teile nochmals getrennt dargestellt, um deren Ausgestaltung und Zusammenwirken näher erkennen zu können.

## Patentansprüche

1. Schneidkopf, insbesondere für eine Baumschere, mit einem hohlen flachen Gehäuse, das durch zwei Gehäusehälften (1, 2) gebildet ist, einen Stielanschluss (21, 22) zur Befestigung an einem Handhabungs-Stiel (26) aufweist und zur Aufnahme eines um eine an dem Gehäuse befestigte Welle (7, 8) verschwenkbaren Messers (6) und einer Gegenschneide (3) ausgebildet ist, deren Schneideelemente tragende Enden aus einer Schmalseite des Gehäuses heraus vorspringen, und mit in dem Gehäuse angeordneten Antriebseinrichtungen (10, 11, 15) für das Messer (6), die ein an einem Hebelarm (61) des Messers (6) angreifendes erstes Verbindungselement (10) und ein sich durch den Stielanschluss (21, 22) zu Betätigungseinrichtungen an dem Stiel erstreckendes zweites Verbindungselement (15) und eine aus zwei koaxial miteinander verbundenen kreisrunden ersten und zweiten Teilen (111, 112) mit unterschiedlichen Durchmessern bestehendes Getrieberad (11) einschließen, das um eine Drehachse (14) in dem Gehäuse (1, 2) drehbar gelagert ist, wobei der erste Teil (111) des Getrieberads (11) einen kleineren Durchmesser als der zweite Teil (112) aufweist und zumindest teilweise von dem ersten Verbindungselement (10) umschlungen ist, dessen erstes Ende an dem ersten Teil (111) befestigt ist und dessen zweites Ende mit dem Hebelarm (61) des Messers (6) verbunden ist und wobei der zweite Teil (112) des Getrieberades zumindest teilweise von dem zweiten Verbindungselement (15) umschlungen ist, dessen eines Ende an dem zweiten Teil (112) befestigt ist und dessen anderes Ende sich in den Stielanschluss (21, 22) erstreckt,
**dadurch gekennzeichnet,**
**dass** der erste Teil (111) des Getrieberades (11) in der Ebene des Messers (6) angeordnet ist, dass das hintere Ende der Gegenschneide (3) einen der Form und Größe des zweiten Teils (112) des Getrieberades (11) angepassten Umriss aufweist,
**dass** der zweite Teil (112) des Getrieberades zumindest im Wesentlichen in der Ebene der Gegenschneide (3) angeordnet ist, und
**dass** sich das andere Ende des den zweiten Teil (112) umschlingenden zweiten Verbindungselementes (15) über eine Umlenkrolle (23) in den Stielanschluss (21, 22) erstreckt.

2. Schneidkopf nach Anspruch 1, **dadurch gekennzeichnet, dass** das Gehäuse (1,2) mit dem Stiel-Anschluss (21, 22) über eine Schwenkwelle (25) schwenkbar verbunden ist, deren Schwenkachse sich im Wesentlichen unter einem rechten Winkel zur Längsachse des Stiels (26) erstreckt, und dass die Umlenkrolle (23) derart angeordnet ist, dass die Längsachse des sich von dem zweiten Teil (112) des Getrieberades (11) zur Umlenkrolle (23) erstreckenden Längenbereichs des zweiten Verbindungselementes (15) gleichachsig zu der Schwenkachse der Schwenkwelle angeordnet ist

3. Schneidkopf nach Anspruch 1 oder 2, **dadurch gekennzeichnet, dass** das erste Verbindungselement (10) durch eine Kette gebildet ist.

4. Schneidkopf nach einem der vorhergehenden Ansprüche, **dadurch gekennzeichnet, dass** das zweite Verbindungselement durch ein Seil (15) gebildet ist.

5. Schneidkopf nach einem der vorhergehenden Ansprüche, **dadurch gekennzeichnet, dass** das erste und/oder zweite Verbindungselement durch ein Band gebildet sind.

6. Schneidkopf nach einem der vorhergehenden Ansprüche, **dadurch gekennzeichnet, dass** die Gegenschneide (3) an einer der Gehäusehälften (2) befestigt ist und dass das Messer über eine Welle (7, 8), die sich durch das Gehäuse und die Gegenschneide erstreckt, in dem Gehäuse schwenkbar befestigt ist.

7. Schneidkopf nach einem der vorhergehenden Ansprüche, **dadurch gekennzeichnet, dass** das Getrieberad (11) über eine Welle (14) in beiden Gehäusehälften (1, 2) drehbar gelagert ist.

8. Shneidkopf nach einem der vorhergehenden Ansprüche, **dadurch gekennzeichnet**, die Drehführung des Stiel-Anschlusses zusätzlich zu der Gelenkschraube (25) im darunterliegenden Bereich über eine ringförmige Nut- und Federverbindung gebildet ist.

9. Schneidkopf nach einem der vorhergehenden Ansprüche, **dadurch gekennzeichnet, dass** der Stiel-Anschluss (21/22) an seiner Oberseite mit radial angeordneten Rastvertiefungen (31) versehen ist, die mit Rastnasen (16) im hinteren Bereich einer elastisch ausgebildeten Rastscheibe (32/33) der Gehäusehälften (2/1) zusammenwirken.

## Claims

1. Cutting head, in particular for a lopper, with a hollow, flat housing which is formed by two housing halves (1, 2), has a handle connector (21, 22) for attachment to a manipulation handle (26), and is designed to accommodate a blade (6) which is pivotable about a shaft (7, 8) that is fixed to the housing and a counter blade (3), the ends of which that support the cutting elements protrude from a narrow side of the housing, and with a driving means (10, 11, 15) for the blade (6) disposed in the housing, which driving means include a first connecting element (10) which acts on a lever arm (61) of the blade (6) and a second connecting element (15) which extends through the handle connector (21, 22) to actuating means on the handle, and a gearwheel (11) consisting of two circular first and second parts (111, 112) with different diameters which are attached coaxially to one another, which is supported so as to be rotatable inside the housing (1, 2) about an axis of rotation (14), wherein the first part (111) of the gearwheel (11) has a smaller diameter than the second part (112) and is at least partly surrounded by the first connecting element (10), the first end of which is attached to the first part (111) and the second end of which is connected to the lever arm (61) of the blade (6), and wherein the second part (112) of the gearwheel is at least partly surrounded by the second connecting element (15), one end of which is attached to the second part (112) and the other end of which extends into the handle connector (21, 22),
**characterized in that**
the first part (111) of the gearwheel (11) is disposed in the plane of the blade (6),
the rear end of the counter blade (3) has a profile which is adapted to the shape and size of the second part (112) of the gearwheel (11),
the second part (112) of the gearwheel is disposed at least substantially in the plane of the counter blade (3) and
the other end of the second connecting element (15) surrounding the second part (112) passes over an idler pulley (23) into the handle connector (21, 22).

2. Cutting head according to Claim 1, **characterized in that** the housing (1, 2) is connected to the handle connector (21, 22) pivotably via a pivot shaft (25), of which the pivot axis extends substantially at a right angle to the longitudinal axis of the handle (26), and **in that** the idler pulley (23) is arranged in such manner that the longitudinal axis of the longitudinal portion of the second connecting element (15) extending from the second part (112) of the gearwheel (11) to the idler pulley (23) is arranged coaxially with the pivot axis of the pivot shaft.

3. Cutting head according to Claim 1 or 2, **characterized in that** the first connecting element (10) is formed by a chain.

4. Cutting head according to any one of the preceding claims, **characterized in that** the second connecting element is formed by a cable (15).

5. Cutting head according to any one of the preceding claims, **characterized in that** the first and/or second connecting element(s) is/are formed by a strap.

6. Cutting head according to any one of the preceding claims, **characterized in that** the counter blade (3) is fastened to one of the housing halves (2) and **in that** the blade is fastened pivotably in the housing via a shaft (7, 8) which extends through the housing and the counter blade.

7. Cutting head according to any one of the preceding claims, **characterized in that** the gearwheel (11) is mounted rotatably via a shaft (14) in both housing halves (1, 2).

8. Cutting head according to any one of the preceding claims, **characterized in that** besides the hinge screw (25) in the area thereunder, the rotary guide of the handle connector is also formed by an annular tongue-and-groove joint.

9. Cutting head according to any one of the preceding claims, **characterized in that** the upper side of the handle connector (21/22) is provided with radially arranged detent recesses (31) which interact with detent prongs (16) in the rear region of an elastic locking disc (32/33) of the housing halves (2/1).

## Revendications

1. Tête de coupe, notamment pour un sécateur, pourvue d'un boîtier creux plat, qui est formé de deux demi-boîtiers (1, 2), comporte un raccord de manche (21, 22) destiné à être fixé sur un manche de manipulation (26) et conçu pour recevoir une lame (6) susceptible de pivoter autour d'un arbre (7, 8) fixé sur le boîtier et une contre-lame (3) dont les extrémités portant des éléments de coupe dépassent d'un côté étroit du boîtier et pourvue de systèmes d'entraînement (10, 11, 15) pour la lame (6), placés dans le boîtier, qui intègrent un premier élément de liaison (10) s'engageant sur un bras de levier (61) de la lame (6) et un deuxième élément de liaison (15) s'étendant à travers le raccord de manche (21, 22) vers des systèmes de manœuvre sur le manche et une roue d'engrenage (11) constituée de deux première et deuxième pièces (111, 112) circulaires, reliées l'une à l'autre de manière coaxiale, de différents diamètres, qui sont logées en rotation autour d'un axe de rotation (14) dans le boîtier (1, 2), la première pièce (111) de la roue d'engrenage (11) présentant un plus petit diamètre que la deuxième pièce (112) et étant entourée au moins en partie par le premier élément de liaison (10) dont la première extrémité est fixée sur la première pièce (111) et dont la deuxième extrémité est reliée avec le bras de levier (61) de la lame (6) et la deuxième pièce (112) de la roue d'engrenage étant entourée au moins en partie par le deuxième élément de liaison (15) dont l'une des extrémités est fixée sur la deuxième pièce (112) et dont l'autre extrémité s'étend dans le raccord de manche (21, 22),
**caractérisée**
**en ce que** la première pièce (111) de la roue d'engrenage (11) est placée dans le plan de la lame (6),
**en ce que** l'extrémité arrière de la contre-lame (3) présente un contour adapté à la forme et à la dimension de la deuxième pièce (112) de la roue d'engrenage (11),
**en ce que** la deuxième pièce (112) de la roue d'engrenage est placée au moins sensiblement dans le plan de la contre-lame (3) et
**en ce que** l'autre extrémité du deuxième élément de liaison (15) qui entoure la deuxième pièce (112) s'étend par l'intermédiaire d'un galet de renvoi (23) dans le raccord de manche (21, 22).

2. Tête de coupe selon la revendication 1, **caractérisée en ce que** le boîtier (1, 2) est relié de manière pivotante avec le raccord de manche (21, 22) par l'intermédiaire d'un arbre de pivot (25) dont l'axe de pivotement s'étend sensiblement sous un angle droit vers l'axe longitudinal du manche (26) et **en ce que** le galet de renvoi (23) est placé de telle sorte que l'axe longitudinal de la zone longitudinale du deuxième élément de liaison (15) s'étendant de la deuxième pièce (112) de la roue d'engrenage (11) vers le galet de renvoi (23) est placé de manière coaxiale à l'axe de pivotement de l'arbre de pivot.

3. Tête de coupe selon la revendication 1 ou 2, **caractérisée en ce que** le premier élément de liaison (10) est formé par une chaîne.

4. Tête de coupe selon l'une quelconque des revendications précédentes, **caractérisée en ce que** le deuxième élément de liaison est formé par un câble (15).

5. Tête de coupe selon l'une quelconque des revendications précédentes, **caractérisée en ce que** le premier et/ou le deuxième élément de liaison est formé par une bande.

6. Tête de coupe selon l'une quelconque des revendications précédentes, **caractérisée en ce que** la contre-lame (3) est fixée sur l'un des demi-boîtiers (2) et **en ce que** la lame est fixée de manière pivotante dans le boîtier par l'intermédiaire d'un arbre (7, 8) qui s'étend à travers le boîtier et la contre-lame.

7. Tête de coupe selon l'une quelconque des revendications précédentes, **caractérisée en ce que** la roue d'engrenage (11) est logée en rotation par l'intermédiaire d'un arbre (14) dans les deux demi-boîtiers (1, 2).

8. Tête de coupe selon l'une quelconque des revendications précédentes, **caractérisée en ce qu'**en supplément de la vis articulée (25), dans la zone sous-jacente, le guidage en rotation du raccord de manche est formé d'un assemblage annulaire par rainure et languette.

9. Tête de coupe selon l'une quelconque des revendications précédentes, **caractérisée en ce que** sur sa face supérieure, le raccord de manche (21/22) est muni de creux d'enclenchement (31) placés en direction radiale, qui coopèrent avec des tenons d'enclenchement (16) dans la zone arrière d'une rondelle d'enclenchement (32/33) des demi-boîtiers (2/1) conçue de manière élastique.
